Europäisches Patentamt

European Patent Office

Office européen des brevets

(11) Veröffentlichungsnummer: **0 367 359**

**A2**

(12) # EUROPÄISCHE PATENTANMELDUNG

(21) Anmeldenummer: **89250060.4**

(22) Anmeldetag: **19.10.89**

(51) Int. Cl.⁵: **B41J 29/48**

(30) Priorität: **31.10.88 DE 3837250**

(43) Veröffentlichungstag der Anmeldung:
**09.05.90 Patentblatt 90/19**

(84) Benannte Vertragsstaaten:
**AT BE CH DE ES FR GB IT LI LU NL SE**

(71) Anmelder: **MANNESMANN Aktiengesellschaft**
**Mannesmannufer 2**
**D-4000 Düsseldorf 1(DE)**

(72) Erfinder: **Stellmach, Dieter, Dipl.-Ing.**
**Königsberger Strasse 36**
**D-7737 Bad Dürrheim(DE)**

(74) Vertreter: **Presting, Hans-Joachim, Dipl.-Ing.**
**et al**
**Meissner & Meissner Patentanwaltsbüro**
**Herbertstrasse 22**
**D-1000 Berlin 33(DE)**

(54) **Sensorvorrichtung für den Anfang oder das Ende eines Aufzeichnungsträgers in einem Verarbeitungsgerät.**

(57) Eine Sensorvorrichtung ist für den Anfang (1a) oder das Ende (1b) eines Aufzeichnungsträgers (1) in einem Verarbeitungsgerät bestimmt, wobei ein Fühlhebel (2) auf dem gefederten Schaltelement (3a) eines Mikroschalters (3) aufliegt und wobei die Anschlußkontakte (5a,5b) des Mikroschalters (3) an eine elektronische Kontroll- bzw. Anzeigeschaltung (4) angeschlossen sind.

Um eine rein mechanische, wirtschaftlich herstellbare Sensorvorrichtung zu schaffen, die für alle Arten von Aufzeichnungsträgern funktionsfähig und verschleißarm ist und den Anfang (1a) oder das Ende (1b) eines Aufzeichnungsträgers (1) mit hoher Genauigkeit festzustellen vermag, wird vorgeschlagen, daß ein erster in die Aufzeichnungsträgerbahn (6) schwenkbarer Fühlhebelarm (2a) an seiner Spitze (9) eine in Anschlagstellung (10) senkrechte und rechtwinklige oder annähernd rechtwinklige Anschlagfläche (11) für den Anfang (1a) des Aufzeichnungsträgers (1) bezogen auf die Aufzeichnungsträgerbahn bildet.

**Sensorvorrichtung für den Anfang oder das Ende eines Aufzeichnungsträgers in einem Verarbeitungsgerät**

Die Erfindung betrifft eine Sensorvorrichtung für den Anfang oder das Ende eines Aufzeichnungsträgers in einem Verarbeitungsgerät, mit einem Fühlhebel, der auf dem gefederten Schaltelement eines Mikroschalters aufliegt und mit einer die Anschlußkontakte des Mikroschalters einschließenden, elektronischen Kontroll-bzw. Anzeigeschaltung.

Derartige Sensorvorrichtungen dienen der Erkennung von Aufzeichnungsträgern (Papierbahnen) und deren Stellung, um einen bestimmten Schreibprozeß einzuleiten. Außerdem wird das Fehlen des Aufzeichnungsträgers registriert.

Zur Erkennung der Papiervorderkante werden häufig optische Sensoren eingesetzt, die entweder nach dem Durchlicht- oder nach dem Reflexprinzip arbeiten. Diese Sensoren weisen Nachteile einer besonders aufwendigen und damit teuren Justierung in Abhängigkeit des Oberflächenspektrums auf. Außergewöhnliche Schwierigkeiten entstehen bei transparenten und farbigen Aufzeichnungsträgern. Die Justierung der verschiedenen Arten von Aufzeichnungsträgern wird außerdem durch Fremdlicht und durch während des Betriebes auftretende Temperaturerhöhungen und Staub erschwert.

Zur Erkennung der Aufzeichnungsträger-Vorderkante wird außerdem ein Abtasthebel auf einem gesteuert schwenkbaren Rahmen eingesetzt, der mit einer Lichtschranke oder mit einem induktiv wirkenden Geber zusammenarbeitet (Mannesmann-Kienzle-Drucker D 245). Derartige, mit einem Abtasthebel auf optische bzw. induktive Geber wirkende Sensorvorrichtungen sind zwar zuverlässig, jedoch durch einen höheren Aufwand, insbesondere durch den separat gesteuerten schwenkbaren Rahmen, relativ teuer in ihrer Herstellung.

Eine induktive Abtastvorrichtung für Papier und Folien, die als Papierdickenfühler arbeitet und Alarm auslöst, wenn mehrere Bögen übereinander liegen, ist durch die DE-Z Elektronik, 1970, Heft 1, Seite 12, bekannt. Bei dieser Vorrichtung wird ein induktiver Aufnehmer benutzt. Er besteht aus einer Hartgummirolle, die mit Federkraft gegen den Transporttisch gedrückt wird. Ein kleiner stabförmiger Magnet ist so an der Rollenhalterung angebracht, daß er sich frei in einer darüberliegenden hochinduktiven Spule bewegen kann. Wenn nun die Rolle einen Papierbogen auf dem Transporttisch erfaßt, wird sie um die Papierstärke nach oben gebracht, wobei der Mangnet tiefer in die Spule eintaucht und in dieser einen kurzen Nadelimpuls erzeugt, der in eine Alarmanzeige umgesetzt wird, wenn mehrere Bögen übereinanderliegen.

Aus dem IBM Technical Disclosure Bulletin Vol. 11, Nr. 11, April 1969, Seite 1482 ist eine Sensorvorrichtung für das Ende eines Aufzeichnungsträgers in einer Schreibmaschine bekannt. Bei dieser Vorrichtung ist ein verschwenkbarer zweiseitiger Fühlhebel vorgesehen, dessen eines Ende unter Federdruck auf dem auf der Schreibmaschinenwalze transportierten Bogen aufliegt, und dessen andere Seite einen Schalterkontakt trägt. Bei Papierende bzw. bei Abwesenheit von Papier wird der Fühler in eine Nut der Schreibmaschinenwalze gezogen und der Kontakt am anderen Hebelende schließt einen Alarmstromkreis. Die die Auflast des Papierfühlers bestimmende Federkraft darf nicht zu groß sein, um Markierungen durch das Schleifen des Fühlers auf der Papierbahn zu vermeiden. Die erforderliche feinfühlige Abstimmung der Federkraft macht das System anfällig gegen äußere Einwirkungen, beispielsweise gegen Erschütterungen, so daß es zu Fehlabschaltungen kommen kann.

Es ist ferner bekannt (DE-OS 29 43 241), eine Papierendeschaltvorrichtung für einen Drucker aus einem mit einem Fühler unter Auflast auf der Papierbahn aufsitzenden Hebel zu gestalten, der an einem Ende um eine Achse parallel zur Papierbahn und quer zur Transportrichtung schwenkbar ist. Auf der dem Hebel gegenüberliegenden Seite der Papierbahn ist eine eiserne Schaltleiste angeordnet, die um eine zur Hebelachse parallele Schwenkachse durch die Einwirkung des ausfahrenden Hebels gegen die Wirkung einer Feder schwenkbar ist, wobei die Schaltleiste durch die Schwenkbewegung einen Schalter des Druckers betätigt. Der Hebel trägt an seinem anderen in Transportrichtung hinteren Ende einen Dauermagneten, dessen eine Polfläche dem einlaufseitigen Schwenkteil der Schaltleiste zugekehrt ist, und die eine Polfläche des Dauermagneten durch Schwenken des Hebels in Transportrichtung einer durchgelaufenen Papierbahn auf den einlaufseitigen Schwenkteil in einer Schwenkstellung der Schaltleiste aufsetzbar ist, in der der einlaufseitige Schwenkteil unter der Wirkung des Dauermagneten in Richtung auf den Dauermagneten geschwenkt ist. Eine solche Papierendeschaltvorrichtung ist nicht nur aufwendig, sondern trägt auch nicht für die genaue Feststellung der Lage des Anfangs oder des Endes eines Aufzeichnungsträgers bei.

Der Erfindung liegt die Aufgabe zugrunde, nach dem Oberbegriff des Anspruchs 1 eine rein mechanische Sensorvorrichtung zu schaffen, die wirtschaftlich herstellbar ist für alle Arten von Aufzeichnungsträgern funktionsfähig, verschleißarm und vor allen Dingen geeignet ist, den Anfang oder das Ende eines Aufzeichnungsträgers mit hoher Genauigkeit festzustellen.

Die gestellte Aufgabe wird bei der eingangs bezeichneten Sensorvorrichtung erfindungsgemäß dadurch gelöst, daß ein erster in die Bahn des Aufzeichnungsgerätes schwenkbarer Fühlhebelarm an seiner Spitze eine in Anschlagstellung senkrechte und rechtwinklige oder annähernd rechtwinklige Anschlagfläche für den Anfang des Aufzeichnungsträgers bezogen auf die Bahn bildet. Diese Lösung ist wegen des einfachen Aufbaus besonders wirtschaftlich herstellbar, äußerst sicher in ihrer Funktion und verschleißarm, und vor allen Dingen kann der Anfang oder das Ende eines Aufzeichnungsträgers mit hoher Genauigkeit gemessen werden. Elemente, wie Federn und Steuerglieder, werden nicht benötigt. Gleichzeitig wird die Kraftwirkung auf die Papiervorderkante geringgehalten, was bei Hebelübersetzungen für den eingesetzten Mikroschalter vorteilhaft ist.

In Weiterbildung der Erfindung wird vorgeschlagen, daß der erste Fühlhebelarm im Bereich einer Nabe einen gegen das federnde Schaltement anliegenden Vorsprung bildet. Die kinematische Ankopplung des Fühlhebels an den Mirkoschalter wird dadurch besonders einfach und sicher. Hierbei wird eine Hebelübersetzung ausgenutzt, die die geringen Betätigungskräfte und Schaltwege von Mikroschaltern berücksichtigt. Bei einer Schaltkraft von 10 Pond am Mikroschalter braucht nur noch eine Kraft von zwei Pond an der vorderen Kante des Aufzeichnungsträgers auftreten.

Eine weitere Verbesserung der Erfindung besteht darin, daß der Fühlhebel doppelarmig ausgebildet ist und etwa mittig zwischen dem ersten und einem zweiten Fühlhebelarm die Nabe aufweist, die an einem Träger des Verarbeitungsgerätes drehgeladert ist und daß der erste in die Bahn des Aufzeichnungsträgers schwenkbare Fühlhebelarm eine geringere träge Masse besitzt als der von der Bahn des Aufzeichnungsträgers entfernte zweite Fühlhebelarm. Allein durch die unterschiedlichen Drehmomente ist es daher möglich, den Fühlhebelarm stets mit dem ersten Fühlhebelarm in der Bahn des Aufzeichnungsträgers zu halten.

Ein Verhaken des Aufzeichnungsträgers am Fühlhebel wird aufgrund eines weiteren Vorschlags dadurch vermieden, daß im Bereich der Spitze des ersten Fühlhebelarms ein kegelschachtförmiger Eingang für den Aufzeichnungsträger mit Ausschnitten für zumindest einen Fühlhebel vorgesehen ist. Ein Verschleiß des Fühlhebels wird dadurch ebenfalls vermindert.

Die Schaltgenauigkeit, d.h. die Schaltkraft und der Schaltweg des Schaltelements am Mikroschalter können außerdem dadurch sehr genau eingestellt werden, indem der Mikroschalter an dem Träger des Verarbeitungsgerätes justierbar gelagert ist.

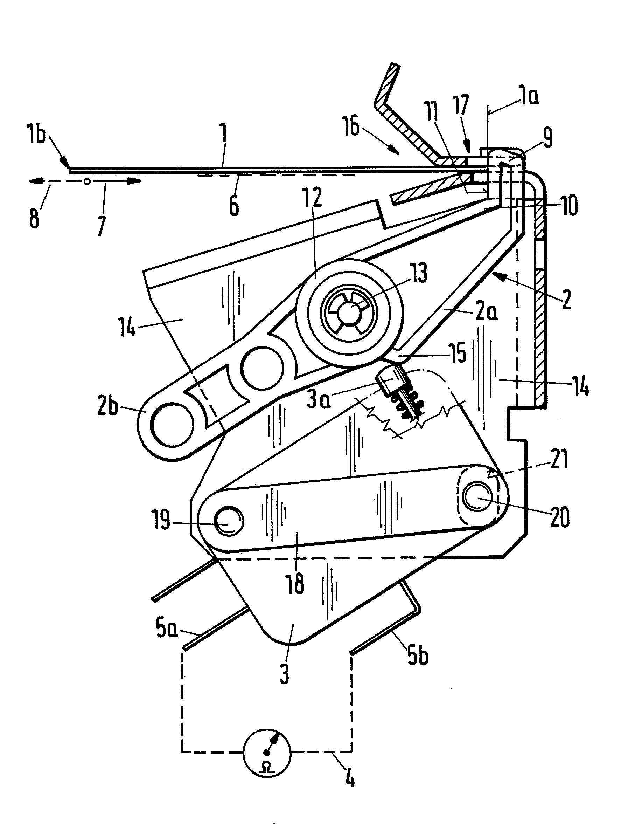

Ein Ausführungsbeispiel der Erfindung ist in der Zeichnung dargestellt und wird im folgenden näher beschrieben.

Die einzige Figur der Zeichnung zeigt eine Seitenansicht der Sensorvorrichtung senkrecht zur Bewegungsrichtung des Aufzeichnungsträgers.

Die Sensorvorrichtung ist für den Anfang 1a oder des Ende 1b eines Aufzeichnungsträgers 1 einsetzbar und befindet sich in der Papierzuführung eines Verarbeitungsgerätes, wie z.B. eines Druckers (Matrixdruckers), eines Banken- bzw. Belegverarbeitungsgerätes oder ähnlicher, Aufzeichnungsträger aus Papier, Belegen oder anderen Dokumenten bedruckenden Verarbeitungsgeräte.

Die Sensorvorrichtung weist einen Fühlhebel 2 auf, der auf einem gefederten Schaltelement 3a eines Mikroschalters 3 aufliegt. Der Mikroschalter 3 löst eine Anzeige in einer elektronischen Kontroll- bzw. Anzeigeschaltung 4 aus, an die die Anschlußkontakte 5a und 5b angeschlossen sind.

Der Aufzeichnungsträger 1 wird entweder in seiner Bahn 6 in Vorschubrichtung 7 oder in Gegenrichtung 8 bewegt. In diese Bahn 6 schwenkt der Fühlhebel 2 mit einem ersten Fühlhebelarm 2a ein, wobei die Spitze 9 des Fühlhebelarms 2a in einer Anschlagstellung 10 eine senkrechte und rechtwinklige oder annähernd rechtwinklige Anschlagfläche 11 für den Anfang 1a des Aufzeichnungsträgers 1 bildet. Es können mehrere solcher Fühlhebelarme 2a auf die Breite des Aufzeichnungsträgers 1 symmetrisch verteilt vorgesehen werden.

Der Fühlhebelarm 2a ist an einer Nabe 12 befestigt, die drehbar um eine Achse 13 in einem Träger 14 des Verarbeitungsgerätes gelagert ist. Im Bereich der Nabe 12 bildet der erste Fühlhebelarm 2a einen gegen das federnde Schaltelement 3a ständig anliegenden Vorsprung 15. Hierbei ist der Fühlhebel 2 doppelarmig ausgebildet, d.h. er besitzt außer dem ersten Fühlhebelarm 2a einen zweiten Fühlhebelarm 2b. Die Nabe 12 liegt außerdem etwa mittig zwischen dem ersten Fühlhebelarm 2a und dem zweiten Fühlhebelarm 2b. Der erste, in die Bahn 6 des Aufzeichnungsträgers 1 schwenkbare Fühlhebelarm 2a weist eine geringere träge Masse auf als der zweite von der Bahn 6 abgewandte Fühlhebelarm 2b, so daß beständig der ein größeres Drehmoment erzeugende Fühlhebelarm 2b den ersten Fühlhebelarm 2a veranlaßt, in die Bahn 6 des Aufzeichnungsträgers 1 mit seiner Spitze 9 einzuschwenken. Die Vorschubbewegung des Aufzeichnungsträgers 1 mit dem Anfang 1a veranlaßt die Spitze 9 des Fühlhebels 2 in eine solche Stellung zu schwenken, daß die Anschlagfläche 11 senkrecht oder annähernd senkrecht steht. In dieser Stellung löst der Vorsprung 15 eine ausreichend große Kraft aus, um das Schaltelement 3a zu betätigen.

Der Aufzeichnungsträger 1 wird vor dem Berühren des Fühlhebels 2 durch einen kegelschachtförmigen Eingang 16 geführt, in dem jeweils ein Ausschnitt 17 pro Fühlhebel 2 vorgesehen ist. Der Eingang 16 ist in seiner Entfernung und in seinem Wirkungsweg auf die Lage der Spitze 9 des ersten Fühlhebelarms 2a abgestimmt.

Die Schaltkraft und der Schaltweg des gefederten Schaltelementes 3a des Mikroschalters 3 kann sehr genau eingestellt werden. Hierzu ist der Mikroschalter 3 an dem Träger 14 des Verarbeitungsgerätes justierbar gelagert. An einer Lasche 18 ist der Mikroschalter 3 mittels Einstellschrauben 19 und 20 befestigt, wobei die Einstellschraube 20 über ein Langloch 21 im Träger 14 verstellt werden kann.

## Ansprüche

1. Sensorvorrichtung für den Anfang (1a) oder das Ende (1b) eines Aufzeichnungsträgers (1) in einem Verarbeitungsgerät, mit einem Fühlhebel (2) der auf dem gefederten Schaltelement (3a) eines Mikroschalters (3) aufliegt und mit einer die Anschlußkontakte (5a, 5b) des Mikroschalters (3) einschließenden. elektronischen Kontroll- bzw. Anzeigeschaltung (4),
dadurch gekennzeichnet,
daß ein erster in die Bahn (6) des Aufzeichnungsträgers (1) schwenkbarer Fühlhebelarm (2a) an seiner Spitze (9) eine in Anschlagstellung (10) senkrechte und rechtwinklige oder annähernd rechtwinklige Anschlagfläche (11) für den Anfang (1a) des Aufzeichnungsträgers (1) bezogen auf die Bahn (6) bildet.

2. Sensorvorrichtung nach Anspruch 1,
dadurch gekennzeichnet,
daß der erste Fühlhebelarm (2a) im Bereich einer Nabe (12) einen gegen das federnde Schaltelement (3a) anliegenden Vorsprung (15) bildet.

3. Sensorvorrichtung nach den Ansprüchen 1 und 2,
dadurch gekennzeichnet,
daß der Fühlhebel (2) doppelarmig ausgebildet ist und etwa mittig zwischen dem ersten (2a) und einem zweiten Fühlhebelarm (2b) die Nabe (12) aufweist, die an einem Träger (14) des Verarbeitungsgerätes drehgelagert ist und daß der erste in die Bahn (6) des Aufzeichnungsträgers (1) schwenkbare Fühlhebelarm (2a) eine geringere träge Masse besitzt als der von der Bahn (6) des Aufzeichnungsträgers (1) entfernte zweite Fühlhebelarm (2b).

4. Sensorvorrichtung nach einem der Ansprüche 1 bis 3,
dadurch gekennzeichnet,
daß im Bereich der Spitze (9) des ersten Fühlhebelarms (2a) ein kegelschachtförmiger Eingang (16) für den Aufzeichnungsträger (1) mit Ausschnitten (17) für zumindest einen Fühlhebel (2) vorgesehen ist.

5. Sensorvorrichtung nach einem der Ansprüche 1 bis 4,
dadurch gekennzeichnet,
daß der Mikroschalter (3) an dem Träger (14) des Verarbeitungsträgers justierbar gelagert ist.

EP 0 367 359 A2